# EUROPEAN PATENT SPECIFICATION

(11) **EP 2 720 495 B1**
(45) Date of publication and mention of the grant of the patent: **27.05.2015**
(21) Application number: 14150870.5
(22) Date of filing: 27.02.2007
(51) Int. Cl.: H04W 36/02, H04L 12/801

(54) **Communication method and apparatus for forwarding data after handover**
Kommunikationsverfahren und Kommunikationsgerät zur Weiterleitung von Daten nach einer Weiterreichung
Méthode et appareil de communication pour transférer des données après un transfert intercellulaire

(30) Priority: 27.03.2006 JP 2006086537
(43) Date of publication of application: 16.04.2014
(62) Divisional of application: 07103156.1
(73) Proprietor: FUJITSU LIMITED, Kawasaki-shi, Kanagawa 211-8588 (JP)
(72) Inventor: Obuchi, Kazuhisa, Kawasaki-shi, Kanagawa 211-8588 (JP); Furukawa, Hideto, Kawasaki-shi, Kanagawa 211-8588 (JP); Kawabata, Kazuo, Kawasaki-shi, Kanagawa 211-8588 (JP); Tajima, Yoshiharu, Kawasaki-shi, Kanagawa 211-8588 (JP); Kawasaki, Yoshihiro, Kawasaki-shi, Kanagawa 211-8588 (JP)
(74) Representative: Stebbing, Timothy Charles

(56) References cited:
- EP-A1- 1 383 292
- EP-A2- 1 320 274
- WO-A-2005/115038
- WO-A-2005/125125

## Description

### BACKGROUND OF THE INVENTION

### 1. Field of the Invention

The present invention relates to a communication method and a communication apparatus.

### 2. Description of the Related Art

In an HSDP (High Speed Downlink Packet Access) technology, developed by 3GPP (Third Generation Partnership Project), which is one of a high speed packet transmission technology, information is buffered by a base station host apparatus (i.e., RNC: Radio Network Controller) and a serial number (simply referred to as a SN, hereinafter) is given to information there, for the purpose of ensuring information continuity upon a handover event.

The principle thereof will now be described.

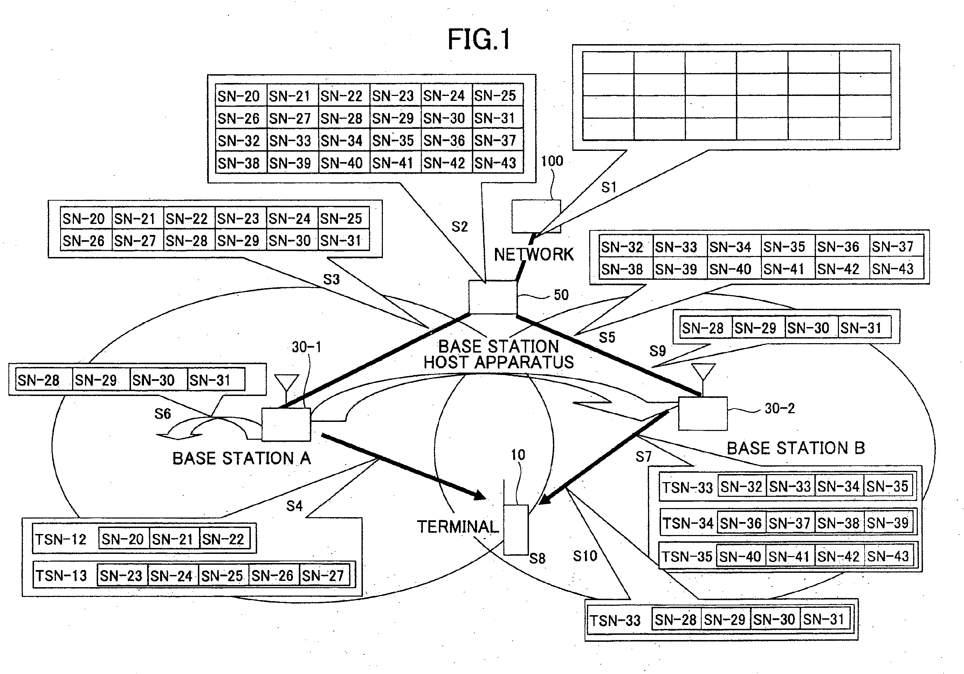

FIG. 1 shows a system configuration example of the HSDP system. The figure shows a case where, a function of transferring, via a network, information transmitted from an external communication station to a user terminal (simply referred to as a terminal, hereinafter) 10, is transferred from a base station (i.e., BTS: Base Transceiver Station) 30-1 to another base station 30-2, that is, a handover event occurs.

The handover means an operation of transferring a function of transferring information to the terminal 10, to another base station which exists in a location most suitable to transfer the information, along with movement of the terminal 10, which may be a cellular phone, i.e., a moving station.

The base station host apparatus 30 gives SN-20, ..., as the above-mentioned SN, for respective ones of predetermined units of information (Step S2), received from the network (Step S1), and transmits the same to the base station 30-1 (Step S3). At this time, the base station host apparatus 50 buffers the same internally.

The base station 30-1 transmits the received information to the terminal 10 (Step S4) without paying attention to SN given thereto. Then, when the above-mentioned handover event occurs, as a result, from the timing, the base station host apparatus 50 transmits the information SN-32, ...., to the base station 30-2, different from the base station 30-1 originally has the function of transferring the information to the terminal 10 (Step S5).

At this time, it is assumed that, the radio circuit is disconnected due to the above-mentioned handover, when the base station 30-1 has transmitted the information SN-20 through SN-27 to the terminal 10 (Step S5), from among the information received from the base station host apparatus 50. In this case, the information SN-28 through SN-31, which has not been transmitted yet, cannot be transmitted due to the radio circuit disconnection, and thus, is discarded (Step S5).

The base station 30-2 starts transmission of the information SN-32, ..., received from the base station host apparatus 50, to the terminal 10 (Step S7). The terminal 10, at this time, has not received the information SN-28 through SN-31. This is because, as mentioned above, the same could not be transmitted from the base station 30-1 to the terminal 10 due to the handover, and thus, were discarded as mentioned above. The terminal 10 receives this fact that the information is lost, by referring to SN given to the information.

As a result, the terminal 10 requests the base station host apparatus 50 for the lost information to be sent again (Step S8). The base station host apparatus 50 receiving this request, and transmits the corresponding information SN-28 through SN-31, to the base station 30-2 (Step S9). The base station 30-2 then transmits the thus-received information, to the terminal 10 (Step S10).

Thereby, the terminal 10 can ensure the continuity of the information as a result of the lost information being thus complemented.

It is noted that, as mentioned above, the base station host apparatus 50 buffers, i.e., holds the information even after already transmitted to the base station, so that the buffered information may be transmitted again when a re-sending request is made from the terminal 10 as mentioned above.

FIG. 2 shows another example of the related art. This art is disclosed by a patent document 2 mentioned below.

In this example, the above-mentioned SN is not used, but transmission serial numbers (simply referred to as TSN, hereinafter) are given, and the information continuity is ensured with the use of TSN.

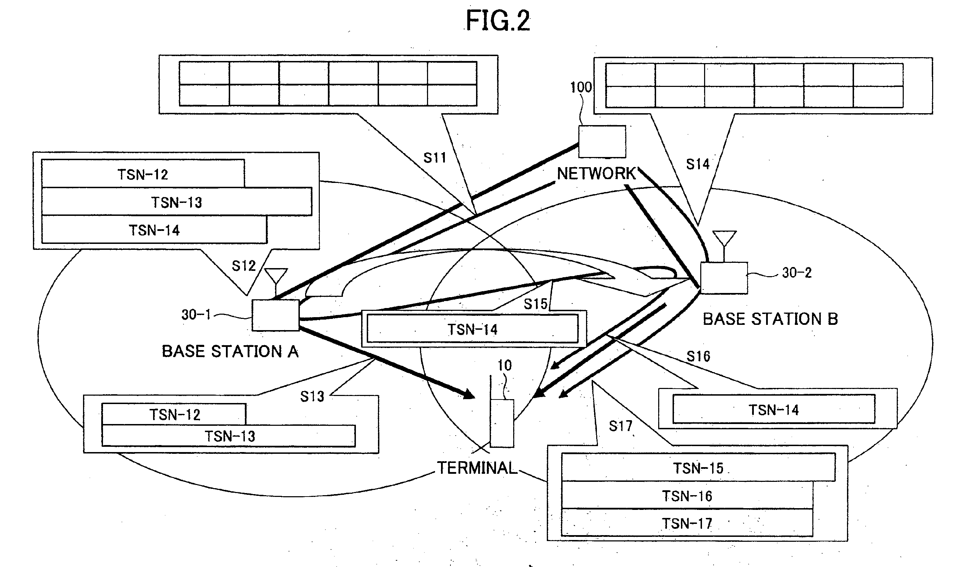

In FIG. 2, a base station 30-1 receives information from an external communication station via a network, gives the TSN-12 through TSN-14 (Step S12), and transmits the information TSN-12 and TSN-13 thereamong, to the terminal 10 (Step S13).

After occurrence of handover event, the external communication station transmits the information then to another base station 30-2 (Step S14). The base station 30-1 transfers the information TSN-14, which cannot be transmitted to the terminal 10 due to the handover, then to the base station 30-2, to which the handover has been thus made (Step S15).

The base station 30-2 waits for the above-mentioned information being transferred from the base station 30-1 (Step S15), and buffers the information received from the external communication station which is received during the waiting period without transferring to the terminal 10.

Then, when the information TSN-14 is received from the base station 30-1, the base station 30-2 transmits the same to the terminal 10 (Step S16). The base station 30-2, at this time, gives TSN-15, ..., to the information which has been transmitted from the external communication station and buffered as mentioned above until then after the handover, and then transmits the same to the terminal 10 (Step S17).

In the case of FIG. 2, as mentioned above, the base station 30-2, to which the handover has been made, waits for the not-yet-transmitted information transferred from the base station 30-1, from which the handover has been made. Then, the same is transmitted to the terminal 10 after being transferred from the base station 30-1, and also, the information, which has been received from the external communication station until then after the handover, is then transmitted to the terminal 10. As a result, in the terminal 10, no loss of the information occurs due to the handover, and the information can be received in the original order properly.

The following documents relates to the present invention:
Patent document 1: Japanese Laid-Open Patent Application No. 11-331208;
Patent document 2: Japanese Laid-Open Patent Application No. 9-186704;
Patent document 3: EP 1 383 292 A1
Patent document 4: EP 1 320 274 A2
Non-patent document 1: 3GPP TS 25.321; and
Non-patent document 2: 3GPP TS 25.322

Patent document 3 discloses a communication system, a terminal, and a base station in accordance with the preamble of each corresponding independent claim, as well as a method including: providing a data message encompassing a predefined sequence of data packets; forwarding data packets of the sequence via a first network element over a first transmission path to a user equipment, whereby a part of the data packets are temporarily buffered in the first network element during transmission; establishing a second transmission path, while forwarding the data packet sequence, such that the remaining data packets of the sequence not yet transmitted over the first path are forwarded via a second network element; forwarding the data packets buffered in the first network element to the second network element for providing all data packets comprised by the data packet sequence to the user equipment; receiving and ordering the data packets within the second network element according to a packet data priority given by the data packet sequence; and forwarding the ordered data packets to the user equipment. Priority is evaluated on the basis of a preset data packet identifier.

Patent document 4 discloses a method for performing a handoff of a mobile terminal (MT) moving between cells of base transceiver stations (BTSs) by a base station controller (BSC) in a mobile communication system including a plurality of BTSs, and the BSC, the method comprising the steps of: if a target BTS is selected as a handoff candidate for the MT as the MT moves from a cell of a source BTS in service toward a cell of the target BTS, transmitting to the target BTS a first message, requesting the target BTS to buffer packets; transmitting packets to be transmitted to the MT to both the source BTS and the target BTS; and if the target BTS is determined as a serving BTS for the MT, transmitting to the target BTS a second message including a last sequence number in order to request the target BTS to transmit, to the MT, packets with sequence numbers following the last sequence number of a last packet transmitted from the source BTS to the MT, among the buffered packets.

### SUMMARY OF THE INVENTION

Aspects of the present invention are as defined in the independent claims, reference to which should now be made. Optional features are defined in the dependent claims.

In the related art shown in FIG. 1, the terminal 10 recognizes a loss of information by referring to SN, and makes a re-sending request to the base station host apparatus 50 for the lost information. By carrying out such a process, an extra time is required for finally ensuring the information continuity, and thus, a delay of communication occurs.

Further, in such as this example, it is necessary to buffer or hold the information once transmitted, to prepare for a possible re-sending request from the terminal 10. Therefore, a corresponding storage area is required in the base station host apparatus 50.

In the related art shown in FIG. 2, in order to ensure the transmitted information continuity, the base station 30-2, to which the handover is made, should defer transmitting the information TSN-15, ..., received from the external communication station after the handing over, until having the not-yet-transmitted information TSN-14 transferred from the base station 30-1, from which the handover is made. Thus, communication delay occurs. Further, in this case, transmission of the information is halted while the base station 30-2 waits for the not-yet-transmitted information transferred from the base station 30-1. As a result, the communication channel is not used during the period, and thus, the communication resource cannot be effectively utilized

The present invention has been devised in consideration thereof, and an object of the present invention is to provide a communication system by which, communication delay occurring due to handover can be minimized, a storage area required in the base station host apparatus 50 can be minimized, and also, the communication resource can be utilized effectively.

In embodiments of the present invention, when a function of one first communication station to transmit predetermined information to a second communication station is transferred to another first communication station, i.e., upon handover, the another first communication station receives the predetermined information from the one first communication station, and transferring the same to the second communication station, where predetermined distinction information is attached to the predetermined information for distinguishing between the predetermined information transferred to the second communication station from the one first communication station via the another first communication station and the predetermined information received from the another first communication station directly.

Thus, upon handover, i.e., when the information transfer function of the one first communication station is transferred to the another first communication station, the predetermined information, which has not been transmitted to the second communication station, is transferred from the one first communication station to the another first communication station. Then, this not-yet-transmitted information is finally transferred to the second communication station via the another first communication station.

In this way, the predetermined information which has not been transmitted to the second communication station from the one first communication station, from which the handover is made, is not discarded, and finally, is transferred to the second communication station via the another first commutation station, to which the handover is made. Accordingly, no loss in the received predetermined information occurs in the second communication station, and thus, no re-sending request is required. Thus, a communication delay can be minimized.

Further, in embodiments of the present invention, the predetermined distinction information is attached to the predetermined information, to distinguish between the predetermined information transmitted directly to the second communication station from the another first communication station, to which the transfer of the function of transmitting the information, i.e., the handling over, is made, and the predetermined information which is transferred to the second communication station from the one first communication station, from which the handover is made, via the another first communication station.

When the predetermined information, transferred to the second communication station from the one first communication station via the another first communication station and the predetermined information directly transmitted from the another first communication station without passing through the one first communication station, are received by the second communication station, the order of the predetermined information may be reversed. Even in such a case, by attaching the predetermined distinction information for distinguishing the predetermined information as mentioned above, the information continuity can be ensured, by referring to the predetermined distinction information of the received predetermined information in the second communication station.

Thus, since no predetermined information is discarded, a re-sending request is not required, and thus, a communication delay, otherwise occurring due to the re-sending control in the related art, can be avoided

Further, since no re-sending request is required, the host apparatus should not have an extra storage area for buffering or holding already transmitted predetermined information to prepare for a re-sending request.

Furthermore, thanks to the above-mentioned function of the distinction information, the another first communication station, to which the handover is made, should not carry out a process of waiting for not-yet-transmitted information transferred from the one first communication station, from which the handover is made, and transmitting information, which is received and buffered until then, to ensure the transmission order of the predetermined information, but can immediately transmit the predetermined information received after the handover. Thus, the communication resource can be effectively unutilized.

### BRIEF DESCRIPTION OF THE DRAWINGS

Other objects and further features of the present invention will become more apparent from the following detailed description when read in conjunction with the accompanying drawings:
FIG. 1 illustrates a communication system in a first example of the related art;
FIG. 2 illustrates a communication system in a second example of the related art;
FIG. 3 illustrates a communication system in a first embodiment of the present invention;
FIG. 4 shows a timing chart illustrating the first example of the related art;
FIG. 5 shows a timing chart illustrating the second example of the related art;
FIG. 6 shows a timing chart illustrating the first embodiment of the present invention;
FIG. 7 shows a timing chart illustrating a second embodiment of the present invention;
FIG. 8 shows a block diagram illustrating each communication apparatus in the communication system in the first example of the related art;
FIG. 9 shows a block diagram illustrating each communication apparatus in the communication system in the second example of the related art;
FIG. 10 shows a block diagram illustrating each communication apparatus in the communication system in the first embodiment of the present invention;
FIG. 11 shows a block diagram illustrating each communication apparatus in the communication system in the second embodiment of the present invention;
FIG. 12 comparatively shows an operation sequence (a) of the communication system in the first example of the related art, and an operation sequence (b) of the communication system in the second embodiment of the present invention; and
FIG. 13 comparatively shows an operation sequence (a) of the communication system in the second example of the related art, and an operation sequence (b) of the communication system in the first embodiment of the present invention.

### DETAILED DESCRIPTION OF THE PREFERRED EMBODIMENTS

With reference to figures, configurations of embodiments of the present invention will now be described.

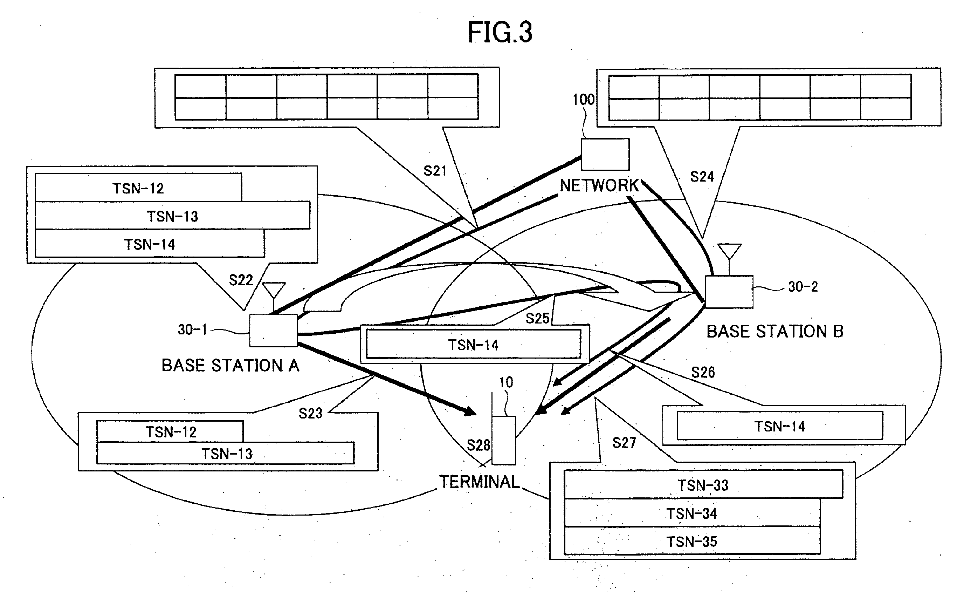

FIG. 3 shows operation of a communication system according to the first embodiment of the present invention, when handover is made from a base station 30-1 to a base station 30-2. That is, a function of transferring information packets received from an external communication station 100 to a terminal 10, is transferred from the base station 30-1 to the base station 30-2.

In FIG. 3, the base station 30-1 gives (Step S22) TSN-12, ..., to the information, received from an external communication station 100 via a network (Step S21), and transmits the same to the terminal 10 (Step S23).

When the handover occurs, the external communication apparatus 100 stops information transmission to the base station 30-1, and starts information transmission to the base station 30-2 (Step S24).

The base station 30-1 transfers the not-yet-transmitted information TSN-14, not yet transmitted to the terminal 20, to the base station 30-2 (Step S25). The base station 30-2 receives the information TSN-14 from the base station 30-1 (Step S25), and transmits the same to the terminal 10 leaving the original TSN given to the information by the base station 30-1 as it is (Step S26).

The base station 30-2 gives new TSN, i.e., TSN-33, ..., to information directly received from the external communication station (Step S24), and transmits the same to the terminal 10 (Step S26).

The terminal 10 has a device to carry out sequence control separately for TSN given by the base station 30-1, and TSN given by the base station 30-2. As a result, the original order of the information can be restored even when the information having both types of TSN is mixed.

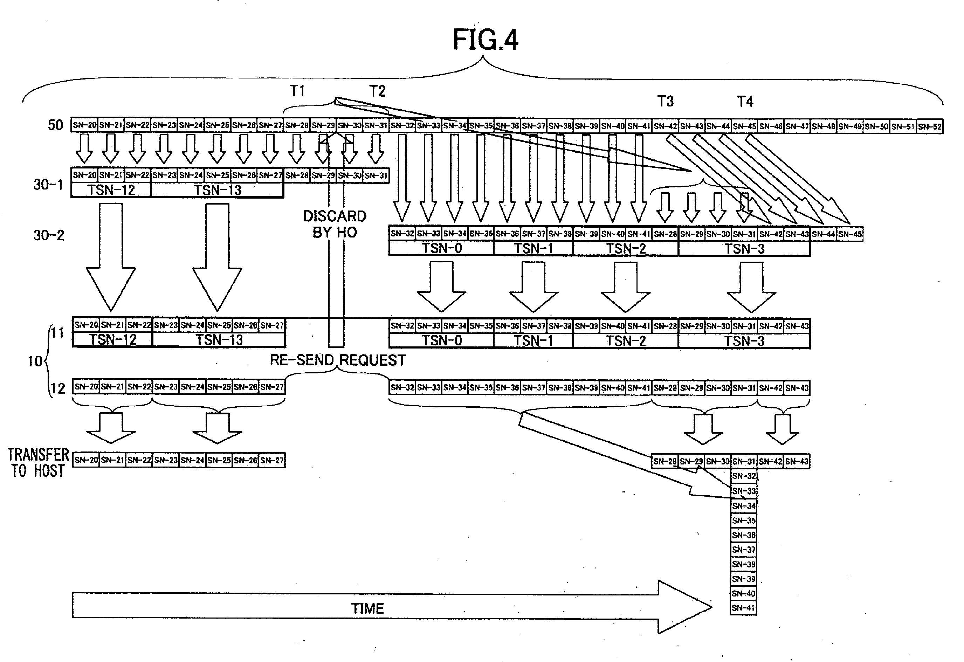

With reference to FIGS. 4 through 13, the embodiments of the present invention will now be described in more detail.

For the purpose of better understanding, the first example of the related art, described above with reference to FIG. 1 and the second example of the related art, described above with reference to FIG. 2, will be first described for the purpose of comparison.

FIG. 4 shows an operation time chart of the communication system in the first example of the related art.

Up to a time T1, information received from the external communication apparatus to the base station host apparatus 50 is transmitted to the terminal 10 via the communication station 30-1. In the base station host apparatus 50, thanks to a so-called RLC (radio link control) function, SN is given to the received information as mentioned above, and then, the information is transmitted to the terminal 10. In the base station 30-1, thanks to a so-called MAC-hs (medial access control-high speed) function, an optimum packet size is set according to a situation of a communication channel between the base station 30-1 and the terminal 10, TSN is given to each packet, and then the packet is transmitted to the terminal 10.

Thanks to the above-mentioned MAC-hs function and RLC function, the terminal 10 confirms the continuity of TSN and SN given to the received information, and after that, transmits the received information to a host computer.

Assuming that the handover (which may be abbreviated as HO, hereinafter) occurs at the time T1, the base station 30-1 discards the not-yet-transmitted information, from among the received information, in this example. Then, after the handover (T2), the base station host apparatus 50 transmits the information to the base station 30-2. Also the base station 30-2, the same as the above, thanks to the MAC-hs, a packet size is set, TSN is given to each packet, and the packet is transmitted to the terminal 10.

Thanks to the RLC function of the terminal 10, a continuity loss is recognized from SN, thus, a loss of the received information is recognized, and a result, a re-sending request is made to the base station host apparatus 50, as mentioned above. Thanks to the RLC function, the terminal 10 halts transmission of the information to the host computer until the lost information is received in response to the re-sending request, for the purpose of ensuring the information continuity of the information to transmit to the host computer. During this period, the terminal 10 buffers or holds the information received from the base station 30-1.

The base station host apparatus 50 receives the re-sending request from the terminal 10, and transmits the buffered information, to the base station 30-2 during a time period between T3 and T4. The base station 30-2, receiving this information, sets a packet size, gives TSN, and transmits the received information, to the terminal 10, according to the order of the received information, thanks to the MAC-hs function, without recognizing SN as mentioned above.

Thanks to the RLC function, the terminal 10 refers to SN given to the received information, and thus, recognizes that the information responding to the above-mentioned re-sending request is received. Then, at the time T4, at which the lost information is thus complemented, the terminal 10 transfers the received information to the host computer, according to SN to ensure the continuity thereof, thus, in such a condition that the order of the information is ensured, together the received and buffered information.

Thus, in the communication system in the first example of the related art, the terminal 10 makes the re-sending request for the lost information, and, after the lost information is complemented, the information is transmitted to the host computer together with the information received and buffered during the waiting period, to the host computer. Accordingly, during the period, i.e., between the time T1 and T4, information transmission to the host computer is halted.

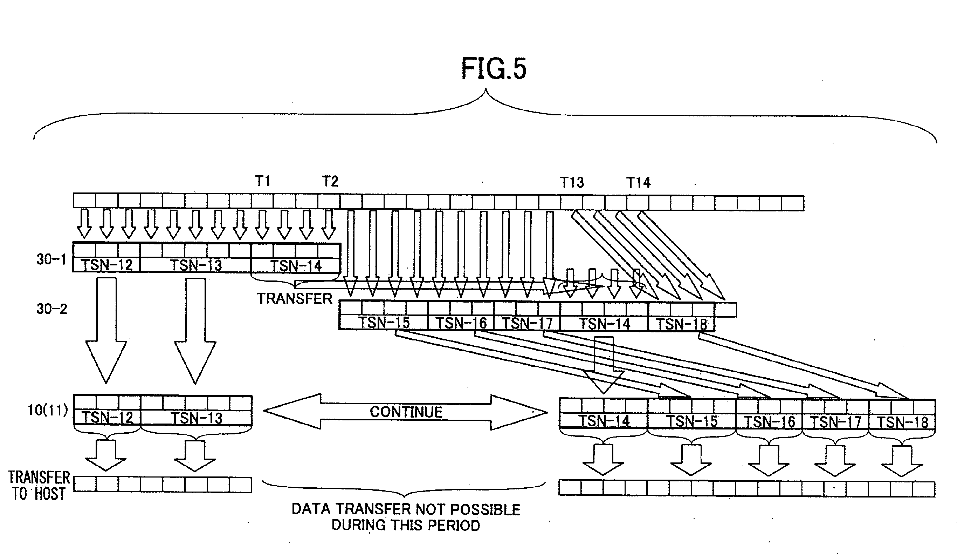

FIG. 5 shows an operation time chart for a case where the communication system in the second example of the related art.

In this case, different from that of FIG. 4, the base station host apparatus 50 is not provided. Therefore, the information transmitted from the external communication station is directly received by the base station 30-1. As a result, the above-mentioned SN is not given to the received information.

The same as the above, the base station 30-1 sets a packet size, gives TSN, and transmits the packet to the terminal 10, thanks to the MAC-hs function.

When a handover event occurs at the time T1, the information received by the base station 30-1 during the handover, i.e., the period between T1 through T3, cannot be transmitted to the terminal 10. In this example, however, the information is not discarded, and is transferred to the base station 30-2, to which the handover is made.

The base station 30-2 buffers or holds the information received after the handover (time T2) without transmitting the same to the terminal 10, and waits for the not-yet-transmitted information transferred from the base station 30-1. Further, the base station 30-2 receives a notification of TSN information from the base station 30-1, and inherits the TSN numbering up to TSN-14, thanks to the MAC-hs function. Then, after that, according to the inherited numbering, TSN is given to the received information continuously (i.e., TSN-15, ...).

Then, when receiving the not-yet-transmitted information (TSN-14) from the base station 30-1 during a period T13 through T14, the base station 30-2 refers to SN given to the received information, thus re-arranges the information according to the continuity (i.e., TSN-14, ...), thanks to the MAC-hs function, and then, transmits the information to the terminal 10 (time T14).

The terminal 10 refers to TSN given to the received information, thus confirms the continuity thereof, thanks to the MAC-hs function, and then, transmits the information to the host computer.

Thus, according to the communication system in the second example of the related art, the base station 30-2, to which the handover is made, should buffer the information TSN-15 through TSN-17 received during the period until the not-yet-transmitted information TSN-14 is transferred from the base station 30-1, from which the handover is made, and thus, should have a corresponding extra storage area.

Further, the base station 30-2 halts information transmission to the terminal 10 during the period (between times T2 and T14) for waiting for the not-yet-transmitted information TSN-14 from the base station 30-1. Accordingly, during the period, the communication resource cannot be effectively unitized.

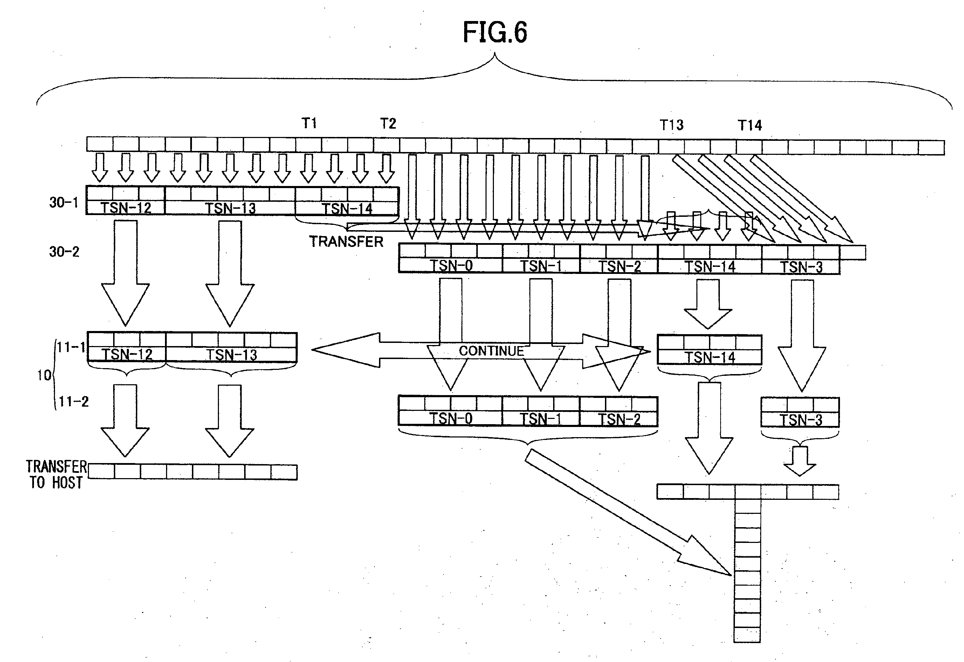

FIG. 6 shows an operation time chart for a case of the first embodiment of the present invention (corresponding to the embodiment described with reference to FIG. 3).

In this case, the base station host apparatus 50 is omitted the same as in the second example of the related art described above with reference to FIG. 5.

What is different from the example of FIG. 5, in the first embodiment of the present invention, is that, after the handover (T1 through T2), the base station 30-2, to which the handover is made, does not buffer the information received even before the not-yet-transmitted information TSN-14 is transferred from the based station 30-1, from which the handover is made, but transmits the same straightly. At this time, the base station 30-2 previously receives a notification of such a number which has no possibility to coincide with TSN, given to the information which the terminal 10 receives until then, from the base station 30-1, from which the handover is made.

In the example of FIG. 6, the terminal 10 has already received the information of TSN-13. Accordingly, it can be expected that the terminal 10 may receive the not-yet-transmitted information from the base station 30-1 of such TSN which is equal to or subsequent to the TSN-14. Accordingly, the terminal 10 notifies, as mentioned above, the base station 30-2, to which the handover is made, of a number, which has no possibility to coincide with the above-mentioned expected TSN, for example, TSN-0. The base station 30-2, receiving the notification, gives TSN in sequence, with the TSN-0 used as an initial value therefor, to the information received after the handover (T2), and transmits the information to the terminal 10 without buffering.

Then, when receiving the not-yet-transmitted information TSN-14 from the base station 30-1 at a time T13, the base station 30-2 transmits the same to the terminal 10 without changing the TSN thereof (T13 through T14).

The terminal 10 manages TSN of the received information before the handover, thanks to the MAC-hs function 11-1. Then, at the time T2, the information of TSN, i.e., the above-mentioned TSN-0, which has no continuity with TSN of the received information until then is thus received. This fact is detected, and the MAC-hs function 11-1 starts up another MAC-hs function 11-2. This other MAC-hs function 11-2 manages the TSN, i.e., TSN-0, ...,having no continuity with the TSN of the information received until then.

After that, at the time T13 through T14, the not-yet-transmitted information TSN-14 is transmitted via the base station 30-1, from which the handover was made, and then, via the base station 30-2, to which the handover was made. The original MAC-hs function 11-1 of the terminal 10 receives it, and detects the continuity with the TSN, i.e., up to TSN-13, which the MAC-hs function 11-1 has managed until then. The terminal 10 obtains the continuity of the received information based thereon.

That is, the information TSN-14, for which the MAC-hs function 11-1 which originally manages TSN detects continuity, is regarded as the information continuous from the information originally managed, while the information TSN-0 through TSN-2, for which the MAC-hs function 11-2 which is started up after the handover detects continuity, is regarded as the information further continuous therefrom. As a result, the terminal 10 re-arranges the received information TSN-14, TSN-0 through TSN-2, in the stated order, and then, transmits the same to the host computer, as shown in FIG. 6.

According to this system, TSN having no possibility to coincide with TSN given before the handover is newly given, and thus, the information can be positively distinguished between those before and after the handover, without requiring SN which is an absolute number independent from the handover. As a result, the not-yet-transmitted information, which is received by the terminal 10 at a late timing since it has passed through the two base stations 30-1 and 30-2, between which the handover is made, can be positively distinguished from the information, which is transmitted from the base station 30-2 directly without passing through the base station 30-1. Accordingly, the terminal 10 can properly obtain the original continuity of the information.

It is noted that, each of the base stations 30-1 and 30-2 has a function of carrying out buffering or holding with giving TSN for re-sending control, and carrying out re-sending control with the use of TSN for the terminal 10. The same as the above, the terminal 10 has a function of using TSN, and carrying out re-sending control with the base station.

In this system, predetermined special distinction information may be attached to TSN such that, resulting TSN, given to the information by the base station 30-1 and by the base station 30-2, respectively, should be positively different from each other.

Further, in this system, after the handover, the information, received before the not-yet-transmitted information TSN-14 is transferred from the base station 30-1, should not be buffered, and is transmitted to the terminal 10 with the new (unique) TSN given thereto, by the base station 30-2. Accordingly, even during this period (T2 through T14), information transmission between the base station 30-1 or 30-1 and the terminal 10 is not halted. Thus, the communication resource can be effectively utilized.

Further, in this system, in order to easily ensure the continuity of the received information before and after the handover, it is preferable that, the last value (TSN-14) first given by the base station 30-1, from which the handover is made, and the value of TSN (TSN-0) which is given by the base station 30-2, to which the handover is made, are notified of to the terminal 10. As a result, the terminal 10 can easily ensure the information continuity by merely combining the last TSN (i.e., TSN-14) with the top TSN (i.e., TSN-0) in the stated order.

Further, the terminal 10 may notify of, not only information of occurrence of the handover, but also TSN which is used with the current base station 30-1. Thereby, the base station 30-2 receiving the notification from the terminal 10, may start using TSN from such a number that has no possibility of coinciding with TSN thus notified of, by adding "20", for example, which is a sufficiently large number, to TSN thus notified.

Further, the terminal 10 may notify of, not only information of occurrence of the handover, but also TSN having a value which is sufficiently distant from TSN which is currently used with the current base station 30-1 (for example, the values obtained from "20", for example, being added). The base station 30-2 receiving TSN thus notified of may use the TSN as an initial value of TSN. In this case, the base station 30-2 should not notify the terminal 10 of the initial value of TSN.

Further, the information, which has been transferred to the terminal 10 but no acknowledgment therefor has been received from the terminal 10 (this means that the information has not been received in a complete condition), may preferably be also regarded as the above-mentioned not-yet-transmitted information in the base station 30-1. By thus regarding such information, i.e., information which has been one transmitted from the base station 30-1 but which has not been received by the terminal in a complete condition, as the not-yet-transmitted information, such information is thus included in the information to be again transferred to the base station 30-2 from the base station 30-1. As a result, the terminal 10 can positively obtain the information continuity.

Further, in this case, the base station 30-1 may preferably notify the base station 30-2 whether or not the information to transfer corresponds to one which is the true the not-yet-transmitted information or one already transmitted but for which no acknowledgment has been made by the terminal 10. As a result, the base station 30-2 may newly set an optimum packet size according to a communication channel situation, i.e., for example, an actual communication quality required between the base station 30-2 and the terminal 10, when the information is the true not-yet-transmitted information. On the other hand, when it is notified that the information to transfer is one for which no acknowledgement have been made, the base station 30-2 can recognize that it is necessary to transmit it without change the packet size.

This is because, as mentioned above, different from the case of the true not-yet-transmitted information, the packet size of the information once transmitted may have been already recognized by the terminal 10. In such a case, if the packet size were changed when it is retransmitted, the terminal 10 would have received the packet having the different size from that already received, and thus, would not easily recognized the information as the identical one.

Further, the base station 30-2 may preferably transmit the information transferred from the base station 30-1, with a priority higher than that of the information directly received without passing through the base station 30-1.

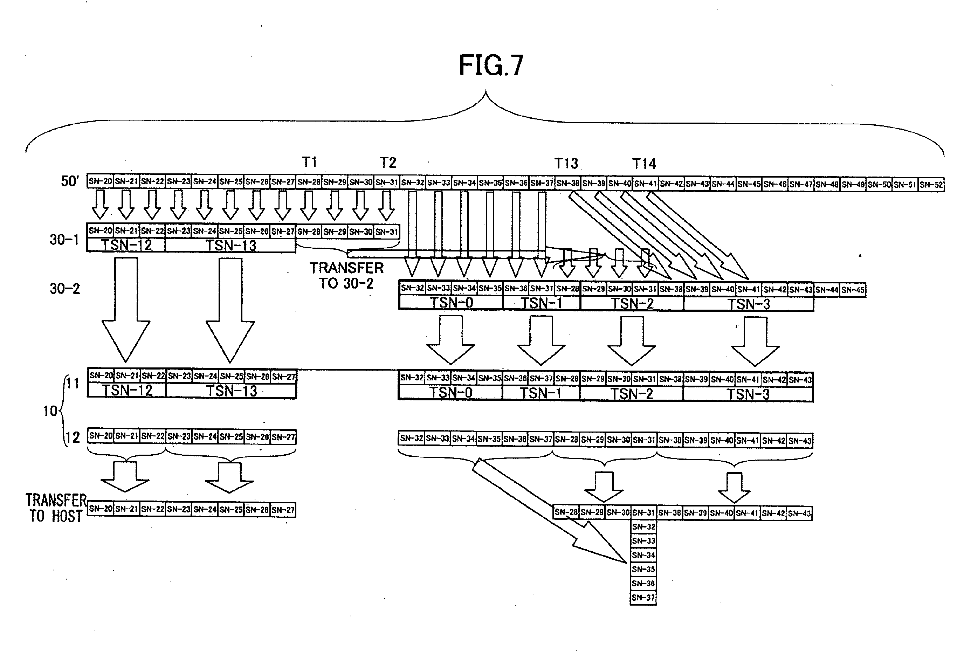

Next, with reference to FIG. 7, the communication system according to the second embodiment of the present invention will be described.

In this case, the same as the first example of the related art described above with reference to FIG. 4, a base station host apparatus 50' is used. However, different from the first example of the related art, the base station host apparatus 50' should not carry out buffering or holding information already transmitted for the purpose of preparing for a possible re-sending request, and thus, no corresponding extra storage area is required.

In this second embodiment, the base station host apparatus 50' is used as mentioned above, and there, SN is given to the information to transmit. SN shows an order of the information to transmit. Then, when handover occurs, and thus, a transmission order of the information may be reversed, the RLC function of the terminal 10 finally obtain the original information continuity properly by referring to SN thus originally given to the information.

In the second embodiment, what is different from the first example of the related art of FIG. 4 is that, upon handover (T1 through T2), the base station 30-1 does not discard the not-yet-transmitted information SN-28 through SN-31 which cannot be transmitted due to the handover, and instead transmits the same to the base station 30-2, to which the handover is made, as shown in FIG. 7. Then, the not-yet-transmitted information is thus transmitted to the terminal 10 from the base station 30-2, and thus, the terminal 10 can obtain all the original information without making a re-sending request.

Accordingly, even when the continuity of the received information is lost during the period T1 through T2 of the handover (..., SN-27, then SN-32, ...), the terminal 10 should no make a re-sending request to the base station host apparatus 50'. Then, the terminal 10 waits for the corresponding information SN-28 through SN-31 which is transmitted (T13 through T14) from the base station 30-1 via the base station 30-2. During the period, the same as in the example of FIG. 4, the terminal 10 buffers or holds the information SN-32 through SN-37, received from the base station 30-2, and thus, halts the transmission to the host computer.

Then, when the corresponding information SN-28 through SN-31 is transmitted (T14), the based station 30-2 transmits the same to the terminal 10, and then, continuously, transmits the information SN-32 through SN-37, received and buffered as mentioned above, to the terminal 10. As a result, in the host computer, the received information continuity is ensured as shown in FIG. 7, since all the original information is thus obtained by the terminal 10 without fail.

It is noted that in the second embodiment, the function of once receiving the information, giving SN thereto and transferring the information to the base station 30-1 or 30-2, should not necessarily be provided by such a special base station host apparatus 50'. For example, instead, any of existing base stations may have the corresponding function. In this case, it is preferable that, the base station which first gives SN should continue the operation to give SN until the communication is disconnected. Further, it is preferable that, the function of giving SN is transferred to another base station when this other base station has a small traffic amount or zero traffic amount.

Further, the same as in the first embodiment described above with reference to FIG. 6, each of the base station 30-1 and 30-2 has a function of giving TSN and carrying out buffering, and carrying out re-sending control with the use of TSN for the terminal 10. The same as the above, the terminal 10 has a function of using TSN, carrying out re-sending control with the base station, and also, as mentioned above, carrying out the received information order control with the use of SN.

Then, when handover occurs, the base station 30-1 transfers the not-yet-transmitted information to the base station 30-2 to which the handover is made.

Along with the occurrence of handover, the terminal 10 resets TSN (T2), while leaves SN as they are.

Further, the same as in the above-described first embodiment, the information, which has been transferred to the terminal 10 but no acknowledgment therefor has been received from the terminal 10, may preferably be also regarded as the above-mentioned not-yet-transmitted information in the base station 30-1. By thus regarding such information, i.e., information which has been one transmitted from the base station 30-1 but which has not been received by the terminal in a complete condition, as the not-yet-transmitted information, such information is to be again transferred to the base station 30-2 from the base station 30-1. As a result, the terminal 10 can positively obtain the information continuity.

Further, in this case, the base station 30-1 may preferably notify the base station 30-2 whether or not the information to transfer corresponds to one which is the true not-yet-transmitted information or one already transmitted but for which no acknowledgment has been made by the terminal 10. As a result, the base station 30-2 may newly set an optimum packet size according to an actual communication quality required between the base station 30-2 and the terminal 10 when the information is the true not-yet-transmitted information. On the other hand, when it is notified that the information to transfer is one for which no acknowledgement have been made, the base station 30-2 can recognize that it is necessary to transmit it without change the packet size.

This is because, as mentioned above, different from the case of the true not-yet-transmitted information, the packet size of the information once transmitted may have been already recognized by the terminal 10. In such a case, if the packet size were changed when it is retransmitted, the terminal 10 would have received the packet having the different size from that already received, and thus, would not easily recognized the information as the identical one.

Further, the base station 30-2 may preferably transmit the information transferred from the base station 30-1, with a priority higher than that of the information directly received without passing through the base station 30-1.

Next, with reference to FIGS. 5 through 11, a configuration of a communication apparatus for achieving the communication system according to each example of the related art and each embodiment of the present invention described above, will be described.

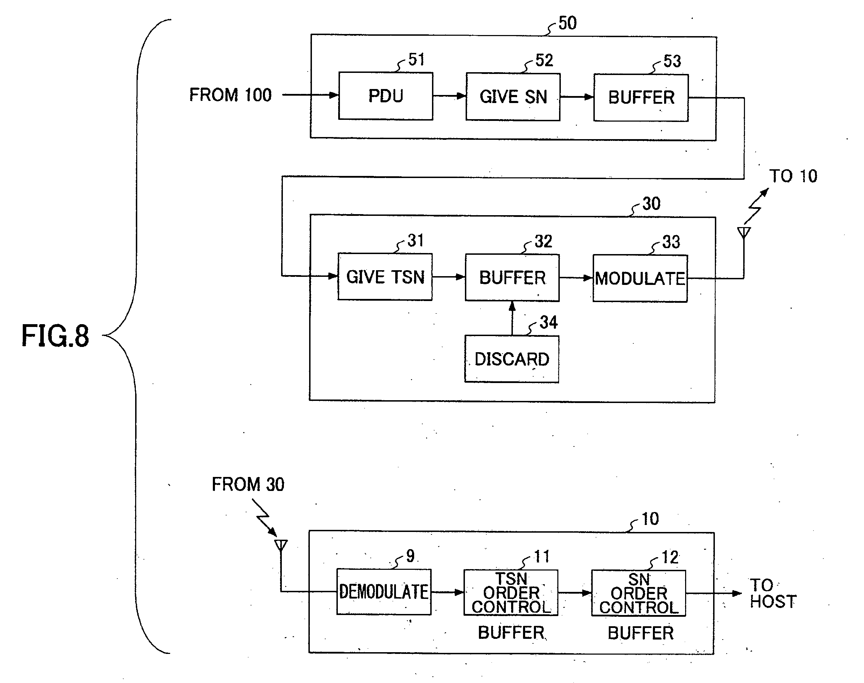

FIG. 8 shows a block diagram showing a configuration of each communication apparatus in the communication system in the first example of the related art described above with reference to FIG. 4.

The base station host apparatus 50 of FIG. 8 has a PDU (packet data unit) 51, a SN giving part 52 and a buffer 53.

The PDU 51 divides the information received from an external communication apparatus, into predetermined information units. The SN giving part 53 gives SN to the thus-obtained information units, respectively. The buffer 53 prepares for a re-sending request, to buffer or hold information already transmitted.

Each of the base stations 30-1 and 30-2 receiving the information from the base station host apparatus 50 has a TSN giving part 31, a buffer 32, a modulating part 33 and a discarding part 34, as shown in FIG. 8.

The TSN giving part 31 determines an optimum packet size according to a communication channel situation for the terminal 10, and gives TSN for each collection of the information having the thus-determined packet size. The buffer 32 buffers or holds the information, once transmitted, for the re-sending control. The modulating part 33 generates a transmission signal according to the transmission information to transmit via a radio channel to the terminal 10. The discarding part 34 discards the information which cannot be transmitted to the terminal 10 due to a handover event as mentioned above.

The terminal 10 receiving the information from the base stations 30-1 and 30-2, i.e., a cellular phone or such, has a demodulating part 9, a TSN (re-sending) order control part 11 and a SN (re-sending) order control part 12, as shown in FIG. 8.

The demodulating part 9 demodulates the signal transmitted from the base station 30-1 or 30-2, to obtain the information; and the TSN (re-sending) order control part 11 having a buffering function, carries out re-sending control with the use of TSN with the base station 30-1 or 30-2. The SN (re-sending) order control part 12 also having a buffering function carries out re-sending control with the base station 30-1 or 30-2.

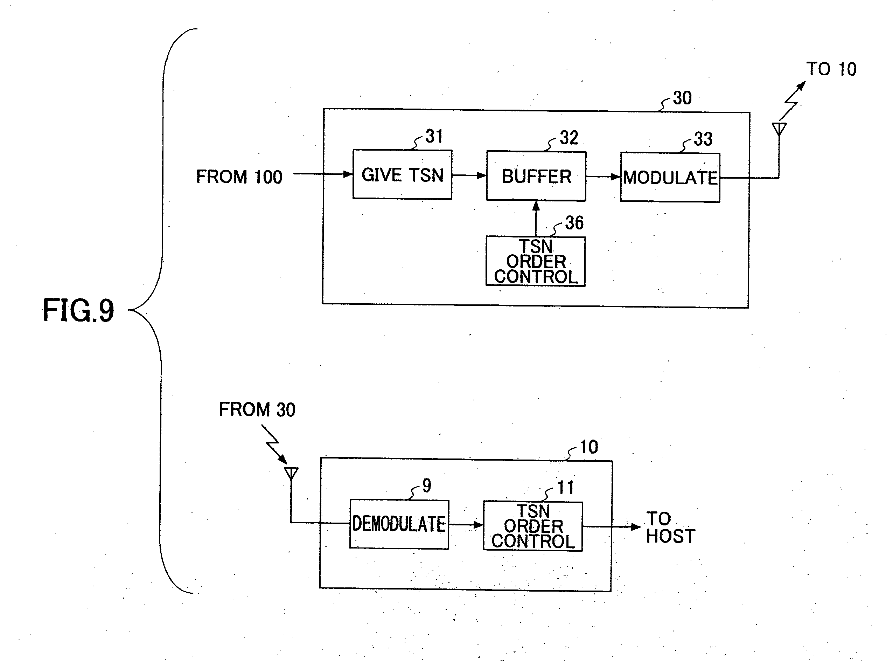

FIG. 9 shows a block diagram showing each communication apparatus for the communication system in the second example of the related art described above with reference to FIG. 5.

As mentioned above, in this example, the base station host apparatus 50 is omitted.

Each of the base stations 30-1 and 30-2 which receives the information from an external communication apparatus 100 via a network has a TSN giving part 31, a buffer part 32, a modulating part 33 and a TSN order control part 36.

The TSN giving part 31 determines an optimum packet size according to a communication channel situation for the terminal 10, and gives TSN for each collection of the information having the thus-determined packet size. The buffer 32 buffers the transmission information for the re-sending control. The modulating part 33 generates a transmission signal according to the information to transmit via a radio channel to the terminal 10. The TSN order control part 36 waits for the not-yet-transmitted information to be transferred from the base station from which the handover is made, and, when receiving the same, carries out re-arrangement of the received information together with the information having been buffered, as mentioned above.

The terminal 10 receiving the information transmitted from the base station 30-1 or 30-2 has a demodulating part 9 and a TSN (re-sending) order control part 11.

The demodulating part 9 demodulates the signal transmitted from the base station 30-1 or 30-2, to obtain the information; and the TSN (re-sending) order control part 11 having a buffering function, carries out the re-sending control with the use of TSN with the base station 30-1 or 30-2.

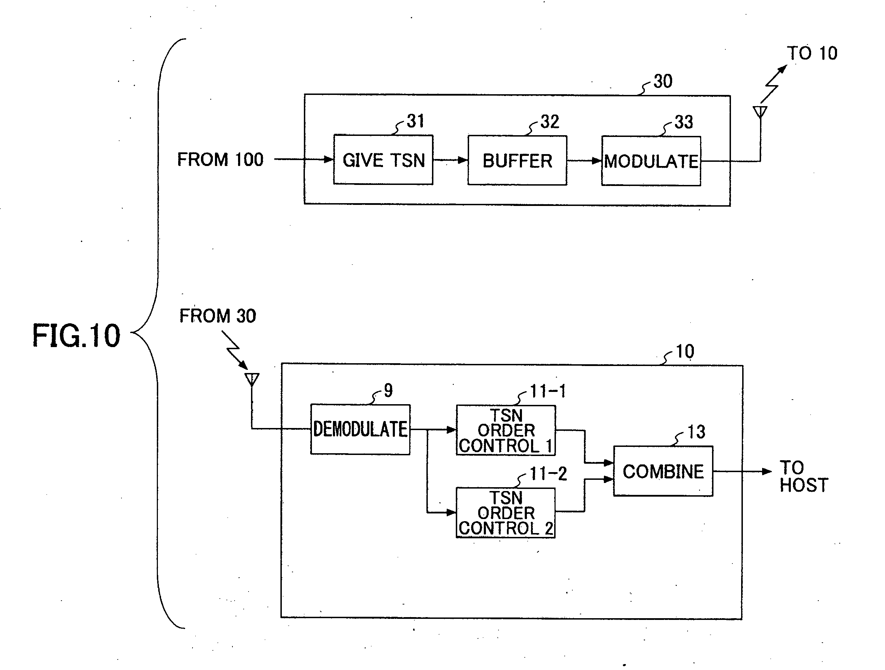

FIG. 10 shows a block diagram showing each communication apparatus for the communication system according to the first embodiment of the present invention described above with reference to FIG. 6.

Also in this case, the same as the case of FIG. 9, the base station host apparatus 50 is omitted.

What is different from the configuration shown in FIG. 9 is that, in each of the base stations 30-1 and 30-2, no TSN order control part 36 is required. Except this, the configuration of FIG. 10 is the same as the configuration of FIG. 9.

The terminal 10 receiving the information from the base stations 30-1 and 30-2 has, different from that of FIG. 9, two TSN (re-sending) control parts 11-1 and 11-2. Except this, the configuration of FIG. 10 is the same as the configuration of FIG. 9.

The reason why these two TSN (re-sending) control parts 11-1 and 11-2 are required is that, the terminal 10 should manage two sets of TSN, as described above with reference to FIG. 6. That is, these TSN (re-sending) control part 11-1 and 11-2 correspond to the MAC-has functions 11-1 and 11-2, respectively, described above with reference to FIG. 6. That is, one manages TSN given by the base station (30-1) from which the handover is made and the other manages TSN given by the base station (30-2) to which the handover is made.

The terminal 10 further has a combining part 13 for combining the two sets of TSN obtained from these TSN (re-sending) order control part 11-1 and 11-2. This is because, it is necessary to combine the received information to which TSN is given by the base station (i.e., the base station 30-1 in the example of FIG. 6) from which the handover is made and the received information to which TSN is given by the base station (i.e., the base station 30-2 in the example of FIG. 6) to which the handover is made, and thus, to ensure the continuity therebetween.

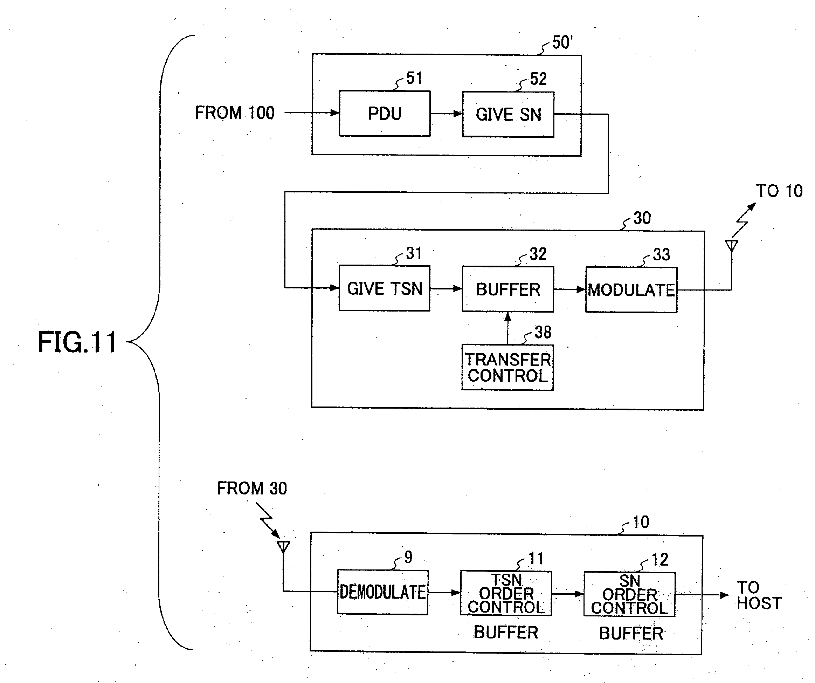

FIG. 11 shows a block diagram showing a configuration of each communication apparatus for the communication system according to the second embodiment described above with reference to FIG. 7.

Basically, in FIG. 11, the same configurations, as those for the communication system in the first example of the related art described above with reference to FIG. 8, are provided.

Only parts which are different from those in the configurations of FIG. 8 will be described, and the duplicated description will be omitted.

First, as mentioned above, the buffer 53 is not required in the base station host apparatus 50'. This is because, it is not necessary to prepare for a possible re-sending request from the terminal 10. This is because, as mentioned above, the base station 30-1 does not discard the information which cannot be transmitted to the terminal 10 upon handover, and transmits the same to the terminal 10 via the base station 30-2.

Further, the discarding part 34 is not required in any of the base station 30-1 and 30-2, and a transfer control part 38 is provided there instead, as shown in FIG. 11.

The transfer control part 38 has a function of, upon handover, recognizing a base station (30-2) to which the handover is made from a notification given by the terminal 10, when the transfer control part 38 is included in the base station from which the handover is made (30-1 in the example of FIG. 7), whereby the not-yet-transmitted information buffered in the buffer 32 which cannot be transmitted to the terminal 10 can be transmitted to the base station to which the handover is made. Contrary, when it is included in the base station (30-2) to which the handover is made, it has a function to receive the not-yet-transmitted information from the base station (30-1) from which the handover is made.

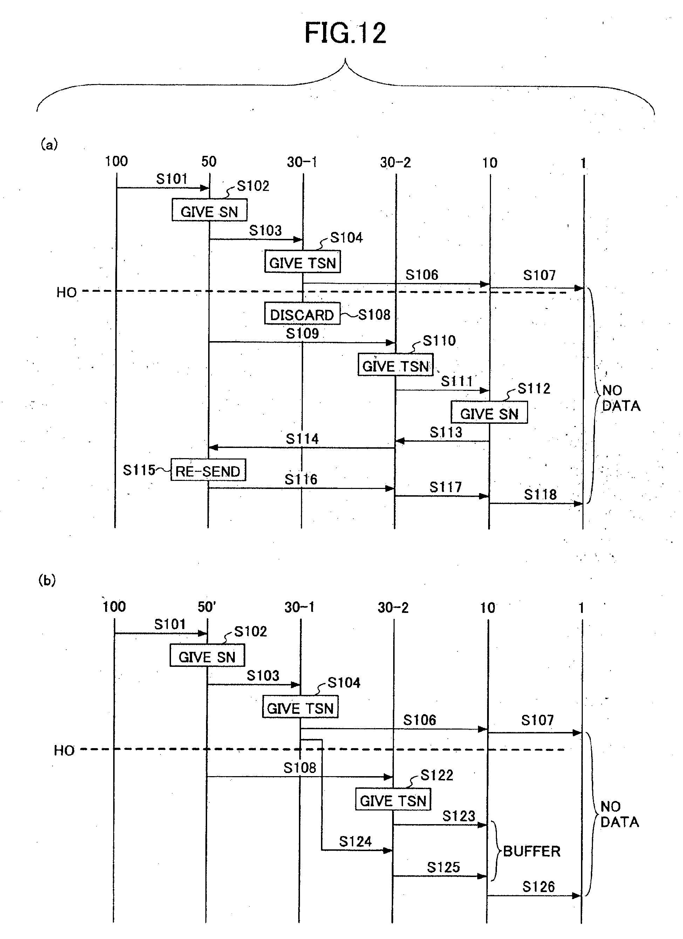

Next, with reference to FIG. 12, description will be made by comparison between the communication system (FIG. 12 (a)) in the first example of the related art and the communication system (FIG. 12 (b)) according to the second embodiment of the present invention.

As shown in FIG. 12 (a), when the base station host apparatus 50 receives the information from the external communication apparatus 100 (Step S101), gives SN (Step S102), and transmits the information to the base station 30-1 (Step S103).

The base station 30-1 receiving it sets a packet size and gives TSN thereto (Step S104), and transmits the information to the terminal 10 (Step S106). The terminal 10 transmits this received information to the host computer (Step S107).

Assuming that handover (HO) occurs at this time, the base station 30-1 discards the not-yet-transmitted information which cannot be transmitted to the terminal 10 (Step S108), and, the base station host apparatus 50 thereafter transmits the information to the base station 30-2 to which the handover is made (Step S108).

The base station 30-2 receiving it sets a packet size, gives TSN (Step S110), and transmits the information to the terminal 10 (Step S111). The terminal 10 refers to SN of the received information, and thus, recognizes a loss occurring in the information (Step S112). As a result, a re-sending request is made to the base station host apparatus 50 via the base station 30-2 (Steps S112 and S114).

The base station host apparatus 50 receiving it and re-sends the corresponding information to the terminal 10 via the base station 30-2 (Steps S115, S116 and S117).

The terminal 10 receiving it transmits it to the host computer, together with the information which has not been transmitted to the host computer, in the order according to SN (Step S118).

In this system of the second example of the related art, as mentioned above, the terminal 10 recognizes the loss of the received information by referring to SN, makes the re-sending request to the base station host apparatus 50, waits for the corresponding information to be again transmitted thereto, and transmits the thus-obtained complemented information, together with the information received until then. Accordingly, a communication delay occurs for a time required for the re-transmission.

On the other hand, in the communication system according to the second embodiment of the present invention shown in FIG. 12 (b), as mentioned above, the not-yet-transmitted information upon handover is not discarded in the base station 30-1 from which the handover is made, and is transferred to the base station 30-2 to which the handover is made (Step S124). The base station 30-2 then transmits it to the terminal 10 as it is (Step S125).

In this embodiment, the base station host apparatus 50' is provided, which gives SN (Step S102), and SN thus given is not influenced by the handover (HO) occurring thereafter. Accordingly, the terminal 10 can determine the original order of the received information regardless of the actual order of receiving the information, by referring to SN of the received information. Then, according to the thus properly recognized order, the terminal 10 can arrange the received information, and thus, the information can be transmitted to the host computer 1 (Step S126) with ensuring the original information continuity.

This system of FIG. 12 (b) is different from the system of FIG. 12 (a), in that no re-sending process is required for lost information from the base station host apparatus 50' in the system of FIG. 12 (b) as mentioned above. As a result, it is possible to effectively reduce a total time required for transmitting the information to the host computer 1 with the original information continuity being positively ensured.

It is noted that, in FIG. 12 (b), the same reference numerals are given to the steps as those of FIG. 12 (a) having the same contents, and the duplicated description therefor is omitted.

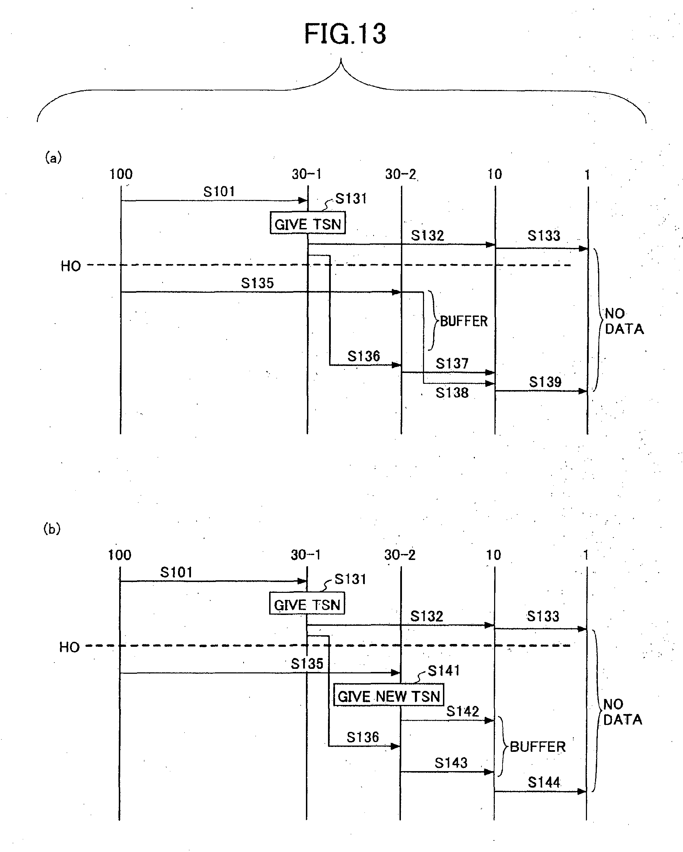

Next, with reference to FIG. 13, description will be made by comparison between the communication system (FIG. 13 (a)) in the second example of the related art and the communication system (FIG. 13 (b)) according to the first embodiment of the present invention.

In the system of FIG. 13 (a), when the base station 30-1 receives the information from the external communication apparatus 100 (Step S101), it sets a packet size, gives TSN (Step S131), and transmits the information to the terminal 10 (Step 132). The terminal 10 transmits this received information to the host computer 1 (Step S133).

Assuming that handover (HO) occurs at this time, the base station 30-1 from which the handover is made transfers the not-yet-transmitted information, which as a result cannot be transmitted to the terminal due to the handover, to the base station 30-2 to which the handover is made (Step S136).

The base station 30-2 to which the handover is made thus receives the information from the external communication apparatus 100, buffers the same without transmitting, and waits for the not-yet-transmitted information to be transferred from the base station 30-1 from which the handover is made. Then, when receiving the not-yet-transmitted information, the base station 30-2 transmits it, together with the received information having been buffered until then, to the terminal 10 (Steps S137 and S138). The terminal 10 then transmits the thus-received information to the host computer 1 (Step S139).

In this system of FIG. 13 (a), as mentioned above, the base station 30-2 to which the handover is made halts the information transmission to the terminal 10 until the not-yet-transmitted information is transferred thereto from the base station 30-1 from which the handover is made. Accordingly, during the period, the communication resource cannot be unutilized effectively.

Further, since the base station 30-2 should buffer, i.e., should hold the received information during the period, an extra storage area is required.

In contrast thereto, in the system of 13 (b) according to the first embodiment of the present invention, information transmission to the terminal 10 is continued even until the not-yet-transmitted information is transferred (Step S136) from the base station 30-1 from which the handover is made, to the base station 30-2 to which the handover is made. During the period, to the information received from the external communication apparatus 100, such TSN is given that it should not coincide with TSN in the base station 30-1 as described above (Step S141), and the information thus given TSN is then transmitted to the terminal 10 (Step S142).

At this time, such TSN is given to the information received by the terminal 10 (Steps S135, S142) directly via the base station 30-2 without once passing through the base station 30-1 from the external communication apparatus 100 and the information received by the terminal 10 (Steps S136, S143) via the base stations 30-1 and then 30-2, that, TSN should not coincide therebetween, as mentioned above. As a result, regardless of the actual received order in the terminal 10, the terminal 10 can positively distinguish therebetween, and thus, can recognize the original order of the information properly. The terminal 10 then can appropriately carry out re-arrangement of the received information according to the thus-recognized original order, and thus can transmit to the host computer 1 (Step S144) with ensuring the original information continuity.

Thus, according to the communication system in the first embodiment of the present invention shown in FIG.13 (B), the communication resource between the base stations 30-1/30-2 and the terminal 10 is continuously used, and thus can be utilized effectively. Also, the base station should not have such an extra storage area for buffering the received information during waiting for the not-yet-transmitted information to be transferred from the base station from which the handover is made, and thus, required equipments in the base station can be effectively reduced.

It is noted that, in FIG. 13(b), the same reference signs are given the to the steps the same as those of FIG. 13(a), and the duplicated description therefor is omitted.

Embodiments of the present invention extend to the following Statements.

Statement 1. A communication method, for transmitting information to a second communication station (10) via a first communication station (30), comprising the steps of:
a) the second communication station (10) receiving the information via one communication station from among a plurality of communication stations;
b) when a function of one first communication station (30-1) to transfer the information to the second communication station (10) is transferred to another first communication station (30-2), said another first communication station (30-2) on receiving the information from said one first communication station (30-1), then transfers the same to the second communication station (10); and
c) attaching distinction information to the information, for distinguishing between the information transferred to the second communication station (10) from the one first communication station (30-1) via the another first communication station (30-2) and the information transmitted directly from the another first communication station (30-2).

Statement 2. The communication method of Statement 1, wherein:
said step of attaching the distinction information comprises the step of:
   c-1) when the function of the one first communication station (30-1) to transfer the information to the second communication station (10) is transferred to the another first communication station (30-2), said another first communication station (30-2) attaches a unique number to the information which is transmitted directly without passing through the one first communication station (30-1).

Statement 3. The communication method of Statement 2, wherein:
said step of attaching the unique number to the information transmitted directly without passing through the one first communication station (30-1) comprises the step of:
   c-2) a number which is used between the second communication station (10) and the one first communication station (30-1) being notified to the another first communication station (30-2), which then adds a value to the thus-notified number, and carries out numbering with the thus-obtained number used as an initial value therefor.

Statement 4. The communication method of Statement 2, wherein:
said step of attaching the unique number to the information transmitted directly without passing through the one first communication station (30-1) comprises the step of:
   c-2) the second communication station (10) adding a value to a number which is used between the second communication station (10) and the one first communication station (30-1), which is then notified to the another first communication station (30-2), which carries out numbering with the thus-obtained number used as an initial value therefor.

Statement 5. The communication method of any one of Statements 1-4, wherein:
in the one first communication station (30-1), for the information which has been transferred to the second communication station (10) but for which no acknowledgement has been received, said information is regarded as not having been transferred yet.

Statement 6. The communication method of Statement 5, wherein:
said one first communication station (30-1) notifies said another first communication station (30-2) of whether or not the information to be transferred to the second communication station (10) is one not yet transferred or one for which no acknowledgment has been received; and
said another first communication station (30-2) sets an optimum packet size according to a communication situation for the second communication station (10), for transferring the information which has not been transferred; but transfers the information without changing the packet size for the case where the acknowledgement has not been received.

Statement 7. The communication method of Statement 1, wherein:
said step of attaching the distinction information is carried out before the information is processed by at least one of said plurality of first communication stations (30).

Statement 8. The communication method of Statement 7, wherein:
in said plurality of first communication stations (30), the information which has been already transferred to the second communication station (10) but for which acknowledgement therefor has not been received yet is regarded as not yet transferred to the second communication station (10).

Statement 9. The communication method of Statement 7 or 8, wherein:
said step of attaching the distinction information is carried out by any one of the plurality of first communication stations (30).

Statement 10. The communication method of Statement 9, wherein:
the operation of attaching the distinction information is continued until the communication in the communication station is disconnected.

Statement 11. A communication apparatus (30-2) transmitting information to a second communication station (10), comprising:
a first part for, when a function of transmitting the information to the second communication station (10) is transferred from another communication station (30-1), receiving the information transferred from said another communication station (30-1), and then transferring the information to the second communication station (10); and
a second part for, when the function of transmitting the information to the second communication station (10) is transferred from said another communication station (30-1), attaching distinction information to the information for distinguishing between the information transferred to the second communication station (10) from said first part and the information transferred to the second communication station (10), which is transmitted directly without passing through the another communication station (30-1).

Statement 12. The communication apparatus (30-2) of Statement 11, wherein:
said second part for attaching the distinction information comprises:
   a part for, when the function of transferring the information is transferred from the another communication station (30-1), attaching a unique number to the information which is transmitted directly without passing through the another communication station (30-1).

Statement 13. The communication apparatus (30-2) of Statement 12, wherein:
said part for attaching the unique number to the information transmitted directly without passing through the another communication station (30-1) comprises:
   a part for notifying said second communication station (10) of a top one of numbers, which said communication apparatus (30-2) itself uses, and wherein in said another communication station (30-1), a last one of numbers, which said another communication station (30-1) uses, is notified of to the second communication station (10).

Statement 14. The communication apparatus (30-2) of Statement 11, wherein:
said second part of attaching the distinction information, is arranged to receive a notification from the second communication station (10) of a number used between the second communication station (10) and the another communication station (30-1), to add a value to the thus-notified number, and to carry out numbering with the thus-obtained number used as an initial value therefor.

Statement 15. The communication apparatus (30-2) of Statement 11, wherein:
said second part of attaching the distinction information, is arranged to receive a notification from the second communication station (10) of a number, which is obtained from a value being added to a number used between the second communication station (10) and the another communication station (30-1), and to carry out numbering with the thus-obtained number used as an initial value therefor.

Statement 16. The communication apparatus (30-2) of any one of Statements 11-15, wherein:
the information which has been transferred to the second communication station (10) but for which no acknowledgement has been received, is regarded as one not yet being transferred.

Statement 17. The communication apparatus (30-2) of Statement 16, wherein the apparatus is responsive to a notification, as to whether or not the information to be transferred to the second communication station (10) is one not yet transferred or one for which no acknowledgment has not been received, the apparatus being arranged to set an optimum packet size according to a communication situation for the second communication station (10) for transferring the information which has not been transferred yet, and to transfer information for which no acknowledgement has been received, without changing the packet size is transferred.

Statement 18. The communication apparatus (30-2) of Statement 11, wherein:
said second part for attaching the distinction information comprises a part for receiving the information and numbering it with a number.

Statement 19. The communication apparatus (30-2) of Statement 18, wherein:
the information which has been already transferred to the second communication station (10) but for which no acknowledgement has been received yet, is regarded as one not yet transferred to the second communication station (10).

Statement 20. The communication apparatus (30-2) of Statement 18 or 19, having a function of numbering with the number when a traffic amount thereof is small or zero.

The present invention is not limited to the above-described embodiments, and variations and modifications may be made without departing from the basic concept of the invention claimed below.

## Claims

1. A radio communication method for a communication system including a first base station (30-1), a second base station (30-2), and a terminal (10), the radio communication method comprising:
transferring, by the first base station (30-1) to the second base station (30-2), data whose transmission from the first base station (30-1) to the terminal (10) has not been completed;
receiving, by the second base station (30-2), a notification including information used to attach order information to non-transferred data that is not transferred from the first base station (30-1), wherein the order information is to be used by the terminal (10) to correctly determine an order of the transferred data and the non-transferred data;
transmitting, by the second base station (30-2), the transferred data to the terminal (10);
attaching, by the second base station (30-2), the order information to the non-transferred data based on the information in the notification;
transmitting, by the second base station (30-2), the non-transferred data with the order information to the terminal;
receiving, by the terminal (10), the transferred data transmitted from the second base station (30-2); and
receiving, by the terminal (10), the non-transferred data with the order information from the second base station (30-2).

2. The radio communication method as claimed in claim 1, wherein the non-transferred data is data that is directly received from a host apparatus (50') of the second base station (30-2) which is different from the first base station (30-1).

3. The radio communication method as claimed in claim 1, wherein the information included in the notification is an initial value of a number to be attached to the non-transferred data, and is updated each time the non-transferred data is transmitted.

4. A radio communication system, comprising:
a first base station (30-1);
a second base station (30-2); and
a terminal (10),
wherein the first base station (30-1) includes a transfer unit that transfers, to the second base station (30-2), data whose transmission from the first base station (30-1) to the terminal (10) has not been completed;
**characterized in that** the second base station (30-2) includes:
a receiving unit that receives a notification including information used to attach order information to non-transferred data that is not transferred from the first base station (30-1), the order information being used by the terminal (10) to correctly determine an order of the transferred data and the non-transferred data, and
a transmitting unit that transmits the transferred data to the terminal (10), attaches the order information to the non-transferred data based on the information in the notification, and transmits the non-transferred data with the order information to the terminal (10); and
wherein the terminal (10) includes a receiving unit that receives the transferred data transmitted from the second base station (30-2), and receives the non-transferred data with the order information from the second base station (30-2).

5. The radio communication system as claimed in claim 4, wherein the non-transferred data is data that is directly received from a host apparatus (50') of the second base station (30-2) which is different from the first base station (30-1).

6. The radio communication system as claimed in claim 4, wherein the information included in the notification is an initial value of a number to be attached to the non-transferred data, and is updated each time the non-transferred data is transmitted.

7. A terminal (10) for a radio communication system including the terminal, a first base station (30-1), and a second base station (30-2), the terminal (10) comprising:
a receiving unit that
receives transferred data transferred from the first base station (30-1) to the second base station (30-2) and transmitted from the second base station (30-2) to the terminal (10), wherein the transferred data is data whose transmission from the first base station (30-1) to the terminal (10) has not been completed, and a number indicating an order of reception is attached to the transferred data, and
receives non-transferred data, which is not transferred from the first base station (30-1), from the second base station (30-2), **characterized in that**
order information to be used by the terminal (10) to correctly determine an order of the transferred data and the non-transferred data is attached to the non-transferred data based on information included in a notification received by the second base station (30-2); and **in that** the terminal further comprises:
a reorder unit that reorders the transferred data and the non-transferred data based on the order information.

8. The terminal (10) as claimed in claim 7, wherein the non-transferred data is data that is directly received from a host apparatus (50') of the second base station (30-2) which is different from the first base station (30-1).

9. The terminal (10) as claimed in claim 7, wherein the information included in the notification is an initial value of a number to be attached to the non-transferred data, and is updated each time the non-transferred data is transmitted.

10. A base station (30-2) for a radio communication system including the base station, another base station (30-1), and a terminal (10), the base station (30-2) comprising:
a transmitting unit that transmits transferred data, which is transferred from the other base station (30-1), to the terminal (10), wherein the transferred data is data whose transmission from the other base station (30-1) to the terminal (10) has not been completed, and a number indicating an order of reception is attached to the transferred data; and **characterised by**
a receiving unit that receives a notification including information used to attach order information to non-transferred data that is not transferred from the other base station (30-1), the order information being used by the terminal (10) to correctly determine an order of the transferred data and the non-transferred data,
wherein the transmitting unit attaches the order information to the non-transferred data based on the information in the notification, and transmits the non-transferred data with the order information to the terminal (10).

## Patentansprüche

1. Ein Funkkommunikationsverfahren für ein Kommunikationssystem, umfassend eine erste Basisstation (30-1), eine zweite Basisstation (30-2) und ein Endgerät (10), wobei das Funkkommunikationsverfahren umfasst:
Übertragen durch die erste Basisstation (30-1) an die zweite Basisstation (30-2) von Daten, deren Übermittlung von der ersten Basisstation (30-1) an das Endgerät (10) nicht abgeschlossen ist;
Empfangen durch die zweite Basisstation (30-2) einer Bestätigung, welche Informationen umfasst, welche zum Anfügen von Reihenfolgeinformationen zu nicht-übertragenen Daten, welche nicht von der ersten Basisstation (30-1) übertragen sind, verwendet werden, wobei die Reihenfolgeinformationen durch das Endgerät (10) zum richtigen Bestimmen einer Reihenfolge der übertragenen Daten und der nicht-übertragenen Daten zu verwenden sind;
Übermitteln durch die zweite Basisstation (30-2) der übertragenen Daten an das Endgerät (10);
Anfügen durch die zweite Basisstation (30-2) der Reihenfolgeinformationen zu den nicht-übertragenen Daten basierend auf den Informationen in der Bestätigung;
Übermitteln durch die zweite Basisstation (30-2) der nicht-übertragenen Daten mit den Reihenfolgeinformationen an das Endgerät;
Empfangen durch das Endgerät (10) der von der zweiten Basisstation (30-2) übermittelten übertragenen Daten; und
Empfangen durch das Endgerät (10) der nicht-übertragenen Daten mit den Reihenfolgeinformationen von der zweiten Basisstation (30-2).

2. Das Funkkommunikationsverfahren wie in Anspruch 1 beansprucht, wobei die nicht-übertragenen Daten Daten sind, welche direkt von einer Hostvorrichtung (50') der zweiten Basisstation (30-2), welche sich von der ersten Basisstation (30-1) unterscheidet, empfangen werden.

3. Das Kommunikationsverfahren wie in Anspruch 1 beansprucht, wobei die in der Bestätigung umfassten Informationen ein Anfangswert einer zu den nicht-übertragenen Daten anzufügenden Nummer sind und jedes Mal, wenn die nicht-übertragenen Daten übermittelt werden, aktualisiert werden.

4. Ein Funkkommunikationssystem umfassend:
eine erste Basisstation (30-1);
eine zweite Basisstation (30-2); und
ein Endgerät (10),
wobei die erste Basisstation (30-1) eine Übertragungseinheit umfasst, welche zu der zweiten Basisstation (30-2) Daten überträgt, deren Übermittlung von der ersten Basisstation (30-1) zu dem Endgerät (10) nicht abgeschlossen ist;
**dadurch gekennzeichnet, dass** die zweite Basisstation (30-2) umfasst:
eine Empfangseinheit, welche eine Bestätigung empfängt, welche Informationen umfasst, welche zum Anfügen von Reihenfolgeinformationen zu nicht-übertragenen Daten, welche nicht von der ersten Basisstation (30-1) übertragen sind, verwendet werden, wobei die Reihenfolgeinformationen durch das Endgerät (10) zum richtigen Bestimmen einer Reihenfolge der übertragenen Daten und der nicht-übertragenen Daten verwendet werden, und
eine Übermittlungseinheit, welche die übertragenen Daten an das Endgerät (10) übermittelt, die Reihenfolgeinformationen zu den nicht-übertragenen Daten basierend auf den Informationen in der Bestätigung anfügt und die nicht-übertragenen Daten mit den Reihenfolgeinformationen an das Endgerät (10) übermittelt; und
wobei das Endgerät (10) eine Empfangseinheit umfasst, welche die von der zweiten Basisstation (30-2) übermittelten übertragenen Daten empfängt und die nicht-übertragenen Daten mit den Reihenfolgeinformationen von der zweiten Basisstation (30-2) empfängt.

5. Das Funkkommunikationssystem wie in Anspruch 4 beansprucht, wobei die nicht-übertragenen Daten Daten sind, welche direkt von einer Hostvorrichtung (50') der zweiten Basisstation (30-2), welche sich von der ersten Basisstation (30-1) unterscheidet, empfangen wird.

6. Das Funkkommunikationssystem wie in Anspruch 4 beansprucht, wobei die in der Bestätigung umfassten Informationen ein Anfangswert einer zu den nicht-übertragenen Daten anzufügenden Nummer sind und jedes Mal, wenn die nicht-übertragenen Daten übermittelt werden, aktualisiert werden.

7. Ein Endgerät (10) für ein Funkkommunikationssystem, umfassend das Endgerät, eine erste Basisstation (30-1 und eine zweite Basisstation (30-2), wobei das Endgerät (10) umfasst:
eine Empfangseinheit, welche
übertragene Daten, welche von der ersten Basisstation (30-1) an die zweite Basisstation (30-2) übertragen sind und von der zweiten Basisstation (30-2) zu dem Endgerät (10) übermittelt sind, empfängt, wobei die übertragenen Daten Daten sind, deren Übermittlung von der ersten Basisstation (30-1) zu dem Endgerät (10) nicht abgeschlossen ist, und wobei eine Nummer, welche eine Empfangsreihenfolge angibt, zu den übertragenen Daten angefügt ist, und
nicht-übertragene Daten, welche nicht von der ersten Basisstation (30-1) übertragen sind, von der zweiten Basisstation (30-2) empfängt, **dadurch gekennzeichnet, dass**
durch das Endgerät (10) zum richtigen Bestimmen einer Reihenfolge der übertragenen Daten und der nicht-übertragenen Daten zu verwendende Reihenfolgeinformationen zu den nicht-übertragenen Daten basierend auf in einer durch die zweite Basisstation (30-2) empfangenen Bestätigung umfassten Informationen angefügt sind; und dadurch, dass das Endgerät weiter umfasst:
eine Neuordnungseinheit, welche die übertragenen Daten und die nicht-übertragenen Daten basierend auf den Reihenfolgeinformationen neuordnet.

8. Das Endgerät (10) wie in Anspruch 7 beansprucht, wobei die nicht-übertragenen Daten Daten sind, welche direkt von einer Hostvorrichtung (50') der zweiten Basisstation (30-2), welche sich von der ersten Basisstation (30-1) unterscheidet, empfangen werden.

9. Das Endgerät (10) wie in Anspruch 7 beansprucht, wobei die in der Bestätigung umfassten Informationen ein Anfangswert einer zu den nicht-übertragenen Daten anzufügenden Nummer sind und jedes Mal, wenn die nicht-übertragenen Daten übermittelt werden, aktualisiert werden.

10. Eine Basisstation (30-2) für ein Funkkommunikationssystem, umfassend die Basisstation, eine andere Basisstation (30-1) und ein Endgerät (10), wobei die Basisstation (30-2) umfasst:
eine Übermittlungseinheit, welche übertragene Daten, welche von der anderen Basisstation (30-1) übertragen sind, an das Endgerät (10) übermittelt, wobei die übertragenen Daten Daten sind, deren Übermittlung von der anderen Basisstation (30-1) an das Endgerät (10) nicht abgeschlossen ist, und wobei eine Nummer, welche eine Empfangsreihenfolge angibt, zu den übertragenen Daten angefügt ist; und **gekennzeichnet ist durch**
eine Empfangseinheit, welche eine Bestätigung empfängt, welche Informationen umfasst, welche zum Anfügen von Reihenfolgeinformationen zu nicht-übertragenen Daten, welche von der anderen Basisstation (30-1) nicht übertragen sind, verwendet werden, wobei die Reihenfolgeinformationen **durch** das Endgerät (10) zum richtigen Bestimmen einer Reihenfolge der übertragenen Daten und der nicht-übertragenen Daten verwendet werden,
wobei die Übermittlungseinheit die Reihenfolgeinformationen zu den nicht-übertragenen Daten basierend auf den Informationen in der Bestätigung anfügt und die nicht-übertragenen Daten mit den Reihenfolgeinformationen an das Endgerät (10) übermittelt.

## Revendications

1. Procédé de communication radio pour un système de communication comprenant une première station de base (30-1), une seconde station de base (30-2), et un terminal (10), le procédé de communication radio comprenant les étapes ci-dessous consistant à :
transférer, par le biais de la première station de base (30-1), à la seconde station de base (30-2), des données dont la transmission de la première station de base (30-1) au terminal (10) n'a pas été achevée ;
recevoir, par la seconde station de base (30-2), une notification incluant des informations utilisées pour annexer des informations d'ordonnancement à des données non transférées qui ne sont pas transférées à partir de la première station de base (30-1), dans lequel les informations d'ordonnancement doivent être utilisées par le terminal (10) pour déterminer correctement un ordonnancement des données transférées et des données non transférées ;
transmettre, par le biais de la seconde station de base (30-2), les données transférées au terminal (10) ;
annexer, par le biais de la seconde station de base (30-2), les informations d'ordonnancement, aux données non transférées, sur la base des informations incluses dans la notification ;
transmettre, par le biais de la seconde station de base (30-2), les données non transférées avec les informations d'ordonnancement, au terminal ;
recevoir, par le biais du terminal (10), les données transférées transmises à partir de la seconde station de base (30-2) ; et
recevoir, par le biais du terminal (10), les données non transférées avec les informations d'ordonnancement, à partir de la seconde station de base (30-2).

2. Procédé de communication radio selon la revendication 1, dans lequel les données non transférées correspondent à des données qui sont directement reçues à partir d'un appareil hôte (50') de la seconde station de base (30-2) laquelle est différente de la première station de base (30-1).

3. Procédé de communication radio selon la revendication 1, dans lequel les informations incluses dans la notification correspondent à une valeur initiale d'un numéro à annexer aux données non transférées, et sont mises à jour chaque fois que les données non transférées sont transmises.

4. Système de communication radio, comprenant :
une première station de base (30-1) ;
une seconde station de base (30-2) ; et
un terminal (10) ;
dans lequel la première station de base (30-1) inclut une unité de transfert qui transfère, à la seconde station de base (30-2), des données dont la transmission, de la première station de base (30-1) au terminal (10), n'a pas été achevée ;
**caractérisé en ce que** la seconde station de base (30-2) inclut :
une unité de réception qui reçoit une notification incluant des informations utilisées pour annexer des informations d'ordonnancement à des données non transférées qui ne sont pas transférées à partir de la première station de base (30-1), les informations d'ordonnancement étant utilisées par le terminal (10) pour déterminer correctement un ordonnancement des données transférées et des données non transférées ; et
une unité de transmission qui transmet les données transférées au terminal (10), annexe les informations d'ordonnancement aux données non transférées sur la base des informations incluses dans la notification, et transmet les données non transférées avec les informations d'ordonnancement, au terminal (10) ; et
dans lequel le terminal (10) inclut une unité de réception qui reçoit les données transférées transmises à partir de la seconde station de base (30-2), et reçoit les données non transférées avec les informations d'ordonnancement en provenance de la seconde station de base (30-2).

5. Système de communication radio selon la revendication 4, dans lequel les données non transférées correspondent à des données qui sont directement reçues à partir d'un appareil hôte (50') de la seconde station de base (30-2) qui est différente de la première station de base (30-1).

6. Système de communication radio selon la revendication 4, dans lequel les informations incluses dans la notification correspondent à une valeur initiale d'un numéro à annexer aux données non transférées, et sont mises à jour chaque fois que les données non transférées sont transmises.

7. Terminal (10) pour un système de communication radio incluant le terminal, une première station de base (30-1), et une seconde station de base (30-2), le terminal (10) comprenant :
une unité de réception qui
reçoit des données transférées qui sont transférées de la première station de base (30-1) à la seconde station de base (30-2) et transmises de la seconde station de base (30-2) au terminal (10), dans lequel les données transférées correspondent à des données dont la transmission, de la première station de base (30-1) au terminal (10) n'a pas été achevée, et un numéro indiquant un ordre de réception est annexé aux données transférées ; et
reçoit des données non transférées, qui ne sont pas transférées à partir de la première station de base (30-1), à partir de la seconde station de base (30-2), **caractérisé en ce que** :
des informations d'ordonnancement destinées à être utilisées par le terminal (10) pour déterminer correctement un ordonnancement des données transférées et des données non transférées sont annexées aux données non transférées sur la base d'informations incluses dans une notification reçue par la seconde station de base (30-2) ; et **en ce que** le terminal comprend en outre :
une unité de réordonnancement qui réorganise les données transférées et les données non transférées sur la base des informations d'ordonnancement.

8. Terminal (10) selon la revendication 7, dans lequel les données non transférées sont des données qui sont directement reçues à partir d'un appareil hôte (50') de la seconde station de base (30-2) qui est différente de la première station de base (30-1).

9. Terminal (10) selon la revendication 7, dans lequel les informations incluses dans la notification correspondent à une valeur initiale d'un numéro à annexer aux données non transférées, et sont mises à jour chaque fois que les données non transférées sont transmises.

10. Station de base (30-2) pour un système de communication radio incluant la station de base, une autre station de base (30-1), et un terminal (10), la station de base (30-2) comprenant :
une unité de transmission qui transmet des données transférées, lesquelles sont transférées à partir de ladite une autre station de base (30-1), au terminal (10), dans lequel les données transférées sont des données dont la transmission, de l'autre station de base (30-1) au terminal (10), n'a pas été achevée, et un numéro indiquant un ordre de réception est annexé aux données transférées ; et **caractérisée par**
une unité de réception qui reçoit une notification incluant des informations utilisées pour annexer des informations d'ordonnancement à des données non transférées qui ne sont pas transférées à partir de l'autre station de base (30-1), les informations d'ordonnancement étant utilisées par le terminal (10) pour déterminer correctement un ordonnancement des données transférées et des données non transférées ;
dans laquelle l'unité de transmission annexe les informations d'ordonnancement aux données non transférées sur la base des informations incluses dans la notification, et transmet les données non transférées avec les informations d'ordonnancement, au terminal (10).
